# EUROPÄISCHE PATENTSCHRIFT

(11) **EP 0 288 723 B1**
(45) Veröffentlichungstag und Bekanntmachung des Hinweises auf die Patenterteilung: **29.09.1993**
(21) Anmeldenummer: 88104249.3
(22) Anmeldetag: 17.03.1988
(51) Int. Cl.: C08K 5/00, C08K 13/02, C08L 27/06, C08L 51/06, C08J 5/18, C08J 7/04

(54) **Aus mehreren Schichten bestehende flexible, tiefziehfähige Kunststoffolie für Kraftfahrzeuge**
Flexible, deep-drawnable plastic resin film for automobiles formed of several layers
Feuille à couches multiples en résine plastique flexible et emboutissable pour automobiles

(30) Priorität: 29.04.1987 DE 3714182
(43) Veröffentlichungstag der Anmeldung: 02.11.1988
(73) Patentinhaber: ALKOR GMBH KUNSTSTOFFE, D-81451 München (DE)
(72) Erfinder: Huber-Hesselberger, Josef, Dipl.-Ing. (FH), D-8000 München 50 (DE)

(56) Entgegenhaltungen:
- EP-A- 0 189 899
- EP-A- 0 256 872
- DE-A- 3 342 435
- DE-A- 3 445 856
- DE-A- 3 505 361
- DE-B- 2 500 239
- GB-A- 1 229 522
- GB-A- 2 107 721
- PATENT ABSTRACTS OF JAPAN, Band 10, Nr. 103 (C-340)[2160], 18. April 1986; & JP-A-60 233 143
- Encyclopedia of PVC, Vol. 1, Chapter 8; Ed. Leonard I. Nass, Marcel Dekker, inc. 1976

## Beschreibung

Die vorliegende Erfindung betrifft eine aus mehreren Schichten bestehende flexible, tiefziehfähige Kunststoffolie für Kraftfahrzeuge bestehend aus 90 bis 25 Gew.-%, vorzugsweise 85 bis 28 Gew.-%, eines Vinylchloridhomopolymerisates, 10 bis 75 Gew.-%, vorzugsweise 15 bis 72 Gew.-%, eines Modifizierungsmittelgemisches, bestehend aus Styrol-Acrylnitril-Copolymerisat (SAN) oder Kombination von Styrol-Acrylnitril-Copolymerisat (SAN) mit mindestens einem weiteren Modifizierungsmittel mit einer Glasumwandlungstemperatur von größer als 70 °C, vorzugsweise größer als 80 °C, und mindestens eines Modifizierungsmittels mit einer Glasumwandlungstemperatur von kleiner als 60 °C, vorzugsweise kleiner als 50 °C, wobei die Summe 1. und 2. 100 % ergibt, sowie zusätzlich mindestens einem Stabilisierungsmittel oder Stabilisierungsmittelgemisch, wobei das Stabilisierungsmittel bezogen auf 100 Gew.-Teile der Kunststoffmischung oder Kunststofflegierung (aus 1 und 2) aus 1 bis 10 Gew.-Teilen, vorzugsweise 2 bis 8 Gew.-Teilen, mindestens eines Stabilisators oder Stabilisatorgemisches auf der Basis einer organisch-chemischen, Schwefel enthaltenden Zinnverbindung, und 0,1 bis 10 Gew.-Teilen, vorzugsweise 1 bis 9 Gew.-Teilen, eines Costabilisierungsmittels oder Costabilisierungsmittelgemisches auf der Basis von Magnesium-Aluminium-Hydroxy-Carbonat und/oder Carbonsäuregruppen enthaltende Magnesiumverbindungen allein oder in Kombination mit Magnesiumoxid und/oder Magnesiumhydroxid, besteht, je 100 Gew.-Teilen der Kunststoffmischung (1 und 2), 0,1 bis 50 Gew.-Teilen, vorzugsweise 5 bis 30 Gew.-Teilen, eines äußeren Weichmachers oder Weichmachergemisches, vorzugsweise auf der Basis eines aliphatischen und/oder aromatischen Polycarbonsäureesters, polymeren Carbonsäureester und/oder epoxidierten natürlichen Öles, sowie gegebenenfalls Füllstoffen, Antioxidantien, Gleitmitteln, Verarbeitungshilfsmitteln, Farbstoffen oder Farbpigmenten, Flammschutzmitteln oder anderen Zusatzmitteln oder Gemischen von einem oder mehreren dieser Stoffe.

Es ist bekannt, daß an die Kraftfahrzeugfolien, d.h. Folien, die im Innenbereich von Kraftfahrzeugen, z. B. bei der Herstellung von Armaturenbrettern, Schalttafeln und dgl. eingesetzt werden, besonders hohe Anforderungen gestellt werden.

Die Folie soll u. a. sehr gut tiefziehfähig sein, da bei kompliziert gebauten Schalttafeln häufig Hinterschnitte und dgl. auftreten, bei denen Materialverdünnungen, Risse und dgl. besonders häufig sind und somit Schäden oder Fehler auftreten können. Neben diesen Eigenschaften müssen jedoch zahlreiche andere Eigenschaften als Voraussetzung für eine Kraftfahrzeugfolie gegeben sein, z. B. entsprechende Alterungsstabilität oder Stabilität bei Kälte-, Wärme- oder Lichteinwirkung, Farbbeständigkeit und verbesserte Reißdehnung.

Erfahrungsgemäß tritt jedoch bei den Kraftfahrzeugfolien ebenfalls ein sehr schwieriges Problem auf. Ändert man nämlich die Zusammensetzung für die Kraftfahrzeugfolien, so treten in der Regel zwar Verbesserungen in einer bestimmten Richtung auf, jedoch findet man gleichzeitig Änderungen und Verschlechterungen in anderen Eigenschaften oder bei der Folienherstellung oder Folienverarbeitung.

Aus der DE-OS 3 342 435 und DE-OS 3 517 583 sind bereits Formmassen mit verbesserten Verarbeitungseigenschaften und daraus hergestellte alterungsbeständige Kunststoffolien bekannt.

Nach der Patentanmeldung DE-A-3342435 sind großtechnisch Kraftfahrzeugfolien nicht bzw. kaum herstellbar. Sobald man nämlich vom Technikumsmaßstab bei der Herstellung auf eine industrielle oder großindustrielle Produktion übergeht, treten neben den Nachteilen des hohen Preises für die speziellen PVC-Acrylat-Pfropfpolymerisate mit verhältnismäßig hohen Acrylatanteil Migrationen und hohe Geruchsbelästigung durch austretende oder sich zersetzende Stoffe bei der Folienherstellung auf, die die Arbeiten bei der Fabrikation belästigen.

Ersetzt man jedoch das PVC-Acrylat-Pfropfpolymerisat durch Vinylchloridhomopolymerisat, so treten Verschlechterungen bei dem Tiefziehverhalten sowie das Risiko der "Fischaugen - oder Stippenbildung" auf.

Aus der EP-A-O 189 899 (9) ist eine mit einem Stabilisator versehene Harzmischung bekannt, die eine Vielzahl von unterschiedlichen Kunststoffen, Zusatzstoffen, Stabilisatoren, Costabilisatoren, Hilfsmittel und dgl. umfaßt, so daß eine große Anzahl Kombinationen gemäß dieser europäischen Patentanmeldung möglich sind. Es ergibt sich jedoch, daß die Vergleichsfolie (gemäß EP-A-O 189 899) Beispiele auf Seite 25 aufgrund ihres schlechten Tiefziehverhaltens, der Reißdehnung, einer gewissen Sprödigkeit und den auftretenden starken Verfärbungen nicht für tiefziehfähige Kraftfahrzeugfolien geeignet ist. Erhöht man aber den Weichmachergehalt der Folie, weil die Folie spröde ist und setzt gegebenenfalls auch ein anderes Gleitmittel ein, so beeinflussen diese Zusätze jedoch negativ den Abfall der Reißdehnung und die Tiefzieheigenschaften.

Dieser Weg wird bereits in den Beispielen 13 und 14 (und Comparative Examples 8 bis 9) eingeschlagen, wobei der Weichmachergehalt auf 25 Gewichtsteile erhöht und zusätzlich Cadmiumstereat verwendet wird. Die Erhöhung des Weichmacheranteiles und die Einbringung von Cadmiumstereat verbessert die Sprödigkeit und die Flexibilität. Diese beeinflußt jedoch negativ den Abfall der Reißdehnung und die Tiefzieheigenschaften.

Gemäß EP-A-0189899 werden daher auch weder tiefziehfähige Folien als Zielsetzung oder Anwendungsgebiete beschrieben oder gefordert, noch Folien für Kraftfahrzeuginnenräume. Die Versuche zur Folienherstellung in der EP-A-0189899 wurden unter Preßverformung (Pultrusion) durchgeführt, ein Verfahren, was nicht zur Herstellung von Kraftfahrzeugfolien für Innenräume geeignet ist.

Bei der Erhöhung des Weichmacheranteiles, z. B. zur Vermeidung spröder Folien (vgl. EP-A-0189899, Seite 30) wird jedoch auf das Dioctylzinmercaptid nicht mehr verwendet, so daß im Rahmen der EP-A-0189899 für die Herstellung flexibler Folien andere Wege eingeschlagen werden.

Es ist weiterhin aus der DE-OS 1 469 886 bekannt für Polyvinylchlorid Metallstabiiisatoren von 1 bis 30 % Calciumcarbonat einzusetzen, um schlagfeste Formkörper zu erhalten. Fügt man jedoch der Formmasse nach DE-OS 3 342 435 oder DE-OS 3 517 583 Metallstabilisatoren in Kombination mit Calciumcarbonat zu, so gelingt es nicht eine Verbesserung der Eigenschaften, insbesondere der Alterungsbeständigkeit bei Wärme- und Lichteinwirkungen, insbesondere bei hohen Temperaturen, Farbänderungen und dgl. zu erzielen.

Ziel und Aufgabe der vorliegenden Erfindung war es, eine flexible, tiefziehfähige Kunststoffolie für Kraftfahrzeuge mit verbesserten Eigenschaften zu finden. An derartige Kraftfahrzeugfolien, d.h. Folien, die im Innenbereich von Kraftfahrzeugen, z.B. bei der Herstellung von Armaturenbrettern, Schalttafeln, Seitenwand- oder Türverkleidungen und drgl. Verwendung finden, werden besonders hohe Anforderungen gestellt. So sollte der Abfall der Reißdehnung speziell bei hoher Oberflächentemperatur deutlich positiv beeinflußt werden, ohne daß sich dabei andere positive Eigenschaften verschlechtern. Die Folie soll u. a. sehr gut tiefziehfähig sein, da bei kompliziert gebauten Schalttafeln häufig Hinterschnitte und dgl. auftreten, bei denen Materialverdünnungen, Risse und dgl. besonders häufig sind und somit Schäden oder Fehler auftreten können. Neben diesen Eigenschaften sollten jedoch zahlreiche andere Eigenschaften als Voraussetzung für eine Kraftfahrzeugfolie gegeben sein, z. B. entsprechende Alterungsstabilität oder Stabilität bei Kälte-, Wärme- oder Lichteinwirkung, Farbbeständigkeit bei Lichteinwirkung und bei Auftreten höherer Temperaturen verbesserte Reißdehnung.

Gemäß der Erfindung besteht diese flexible, tiefziehfähige Kunststoffolie für Kraftfahrzeuge aus 90 bis 25 Gew.-%, vorzugsweise 85 bis 28 Gew.-%, eines Vinylchloridhomopolymerisates, 10 bis 75 Gew.-%, vorzugsweise 15 bis 72 Gew.-%, eines Modifizierungsmittelgemisches bestehend aus Styrol-Acrylnitril-Copolymerisat (SAN) oder Kombination von Styrol-Acrylnitril-Copolymerisat (SAN) mit mindestens einem weiteren Modifizierungsmittel mit einer Glasumwandlungstemperatur von größer als 70 °c, vorzugsweise größer als 80 °c, und mindestens eines Modifizierungsmittels mit einer Glasumwandlungstemperatur von kleiner als 60 °C, vorzugsweise kleiner als 50 °c, wobei die Summe 1. und 2. 100 % ergibt, sowie zusätzlich mindestens einem Stabilisierungsmittel oder Stabilisierungsmittelgemisch, wobei das Stabilisierungsmittel bezogen auf 100 Gew. -Teile der Kunststoffmischung oder Kunststofflegierung (aus 1 und 2) aus 1 bis 10 Gew.-Teilen, vorzugsweise 2 bis 8 Gew.-Teilen, mindestens eines Stabilisators oder Stabilisatorgemisches auf der Basis einer organisch-chemischen, Schwefel enthaltenden Zinnverbindung, und 0,1 bis 10 Gew.-Teilen, vorzugsweise 1 bis 9 Gew.-Teilen, eines Costabilisierungsmittels oder Costabilisierungsmittelgemisches auf der Basis von Magnesium-Aluminium-Hydroxy-Carbonat und/oder Carbonsäuregruppen enthaltende Magnesiumverbindungen allein oder in Kombination mit Magnesiumoxid und/oder Magnesiumhydroxid, je 100 Gew.-Teilen der Kunststoffmischung (1 und 2), 0,1 bis 50 Gew.-Teilen, vorzugsweise 5 bis 30 Gew.-Teilen, eines äußeren Weichmachers oder Weichmachergemisches, vorzugsweise auf der Basis eines aliphatischen und/oder aromatischen Polycarbonsäureesters, polymeren Carbonsäureester und/oder epoxidierten natürlichen Öles, sowie gegebenenfalls Füllstoffen, Antioxidantien, Gleitmitteln, Verarbeitungshilfmitteln, Farbstoffen oder Farbpigmenten, Flammschutzmitteln oder anderen Zusatzmitteln oder Gemischen von einem oder mehreren dieser Stoffe, wobei die Kunststoffolie eine Gesamtdicke von 300 - 2.500 µm aufweist, aus mindestens einer Unterschicht oder Unterfolie und mindestens einer 40 bis 500 µm dicken Oberschicht oder Oberfolie besteht und unmittelbar auf der Oberschicht oder Oberfolie oder über eine darauf befestigte Kunststoffschicht, Druckschicht und/oder Haftschicht eine Lackschicht mit einer Dicke von 10 - 200 µm angeordnet ist.

Überraschend wurde festgestellt, daß bei Kunststoffbahnen oder Kunststoffolien der vorgenannten Zusammensetzung neben anderen Eigenschaftsverbesserungen auch der Abfall der Reißdehnung, speziell bei hoher Oberflächentemperatur, deutlich positiv beeinflußt wird.

Besonders markant sind diese erreichten Verbesserungen dann, wenn als Modifizierungsmittel ein weichmachendes Polymer, z.B. Ethylen-Vinylacetat-Copolymerisat, Ethylen-Vinylacetat-Kohlenmonoxid-Terpolymerisat und/oder chloriertes Polyethylen usw., die ohne Zusatz stark verfärben oder schnell an Reißdehnung verlieren, verwendet werden.

Die erfindungsgemäße Kunststoffbahn oder Kunststoffolie enthält je 100 Gew.-Teile der Kunststoffmischung (1 und 2) zusätzlich 0,1 - 50 Gew.-Teile, vorzugsweise 5 - 30 Gew.-Teile eines äußeren Weichmachers oder Weichmachergemisches, vorzugsweise auf der Basis eines aliphati-schen und/oder aromatischen Polycarbonsäureesters, polymeren Carbonsäureester und/oder epoxidierten natürlichen Öles.

Nach einer bevorzugten Ausführungsform beträgt das Gewichtsverhältnis des Modifizierungsmittels oder Modifizierungsmittelgemisches mit einer Glasumwandlungstemperatur von größer als 70 °C, vorzugsweise größer als 80 °C, zu dem weiteren Modifizierungsmittel oder Modifizierungsmittelgemisch mit einer Glasumwandlungstemperatur von kleiner als 60 °C, vorzugsweise kleiner als 50 °C, 4 : 1 bis 1 : 4, vorzugsweise 3 : 1 bis 1 : 3. Das Polymere oder das Polymergemisch (Modifizierungsmittel), das eine Glasumwandlungstemperatur von größer als 70 °C, vorzugsweise größer als 80 °C, besitzt, ist ein Styrol-Acrylnitril-Copolymerisat (SAN), oder SAN und ein Methylstyrol-Acrylnitril-Copolymerisat, ein Styrol-Maleinsäureanhydrid-Copolymerisat, ein Polymethylmethacrylat (PMMA) und/oder ein Copolymerisat aus einem oder mehreren Acrylestern mit Acrylnitril oder eine Mischung von zwei oder mehreren dieser Polymerisate oder Copolymerisate und das andere Polymere oder Polymergemisch (Modifizierungsmittel), das bevorzugt in Kombination mit dem vorgenannten Modifizierungsmittel eingesetzt wird, ist bevorzugt ein Homo-, Pfropf-Copolymerisat oder eine Kunststofflegierung oder -mischung mit polaren Gruppen mit einer Glasumwandlungstemperatur von kleiner als 60 °c, vorzugsweise kleiner als 50 °C.

Dieses andere Modifizierungsmittei besteht aus mindestens einem Olefin-Copolymerisat oder -Terpolymerisat mit polaren Gruppen, vorzugsweise einem Ethylen-Copolymerisat oder -Terpolymerisat mit polaren Gruppen, mit einer Glasumwandlungstemperatur von kleiner als 60 °C, vorzugsweise kleiner als 50 °C.

Die Kunststoffbahn oder Kunststoffolie ist eine Folie und weist eine Gesamtdicke von vorzugsweise 600 bis 1500 µm auf.

Nach einer anderen bevorzugten Ausführungsform weist die Kunststoffbahn oder Kunststoffolie eine Gesamtdicke von 300 bis 2500 µm, vorzugsweise 600 bis 1500 µm, auf und besteht aus mindestens einer Unterschicht oder Unterfolie und aus mindestens einer Oberschicht oder Oberfolie, wobei die Oberschicht oder Oberfolie eine Dicke von 40 bis 500 µm, vorzugsweise 80 bis 400 µm, beträgt. Vorzugsweise weichen dabei die Zusammensetzung und/oder der Gewichtsanteile der einzelnen Bestandteile zwischen Unterschicht oder Unterfolie und Oberschicht oder Oberfolie voneinander ab.

Nach einer weiteren bevorzugten Ausführungsform ist unter der Unterfolie eine Sperr- und/oder Haftschicht mit einer Dicke von 3 bis 200 µm, vorzugsweise 10 bis 150 µm, angeordnet.

Das Polymere mit einer Glastemperatur unter 60 °C, vorzugsweise unter 50 °C, ist nach einer Ausführungsform bis zu 60 Gew.-% (bezogen auf 100 Gewichtsteile des Polymeren mit der Glastemperatur unter 60 °C, vorzugsweise unter 50 °C), vorzugsweise bis zu 45 Gew.-%, durch Nitrilbutadien-Kautschuk, Ethylen-Propylen-Copolymerisat und/oder Ethylen-Propylen-Dien-Polymerisat (EPDM) ersetzt.

Die Erfindung betrifft weiterhin die Verwendung der Kunststoffbahn oder Kunststoffolie als Innenverkleidungsteile oder -oberflächen für Kraftfahrzeuge, insbesondere für Schalttafeln, Armaturenbretter, Seitenwände, Rückwände, Abdeckungen oder Autohimmel. Sie können unmittelbar vorgeformt eingesetzt oder vorzugsweise in Form der tiefgezogenen hinterschäumten Formteile oder Gegenstände verwendet werden.

Nach einer Ausführungsform wird die vorgenannte Folie als Unterfolie verwendet und zusätzlich eine weichmacherarme Oberfolie mit einer bestimmten Zusammensetzung. Die Oberfolie besitzt nach einer bevorzugten Ausführungsform eine Dicke von 100 bis 500 µm, vorzugsweise 120 bis 200 µm, und besteht aus Polyvinylchlorid sowie einem Plastifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist oder aus Mischungen von Polyvinylchlorid oder Vinylchlorid-Copolymerisat mit einem anderen Kunstharz, vorzugsweise einem Acrylnitril-Copolymerisat oder einem Kunstharzgemisch auf der Basis von Acrylnitril-Copolymerisat und/oder einem Plastifiziermittel oder Modifizierungsmittel auf der Basis eines plastifizierenden Hochpolymeren mit polaren Gruppen, das ein Molekulargewicht von größer als 10.000, vorzugsweise größer als 30.000, aufweist und mit Polyvinylchlorid eine Phase bildet oder mit Polyvinylchlorid verträglich ist. Die Oberfolie kann auch als Unterfolie oder als Monofolie Verwendung finden.

Als Polyvinylchlorid für die Kunststoffbahn Laminate oder coextrudierte Folien aus Unter- und Oberfolie) werden Vinylchloridhomopolymerisate eingesetzt. Es können jedoch auch Vinylchlorid-Copolymerisate, die durch Polymerisation mit bis zu 20 Gew.-%, vorzugsweise bis zu 10 Gew.-%, (bezogen auf 100 Gew.-% Vinylchlorid-Copolymerisat) anderer olefinisch ungesättigter Monomere hergestellt werden, Verwendung finden.

Als Vinylchloridpolymyerisate werden bevorzugt Suspensions- und Blockpolymerisate eingesetzt. Es können jedoch auch Emulsionspolymerisate Verwendung finden. Als Polyolefine für die Folie können Polyethylen, Polypropylen sowie Copolymere von Ethylen und Propylen oder Legierungen von einem oder mehreren dieser Bestandteile eingesetzt werden.

Nach einer bevorzugten Ausführungsform besteht das Acrylnitril-Copolymerisat, das für die Kunststoffbahn eingesetzt wird, aus Styrol-Acrylnitril-Copolymerisat (SAN) und/oder Acrylnitril-Butadienharz (NBR).

Das Plastifiziermittel für die Kunststoffbahn bzw. Kunststoffmischung für die Kunststoffbahn besteht aus einem plastifizierenden Hochpolymeren mit polaren Gruppen, das mit dem Polyvinylchlorid ein Glaspunkt bildet, der zwischen dem Glaspunkt des PVC und dem Glaspunkt des Plastifiziermittels liegt.

Nach einer Ausführungsform besteht das Acrylnitril-Copolymerisat der Oberfolie aus Styrol-Acrylnitril-Copolymerisat (SAN) und/oder Acrylnitril-Butadienharz (NBR).

Nach einer bevorzugten Ausführungsform beträgt der PVC-Gehalt der Oberfolie (bezogen auf die Kunstharzmischung bzw. -legierung, ohne Füllstoffe und Verarbeitungshilfmittel) mehr als 50 Gew.-%, vorzugsweise mehr als 60 Gew.-%.

Der Gehalt des polare Gruppen aufweisenden Plastifiziermittels oder Plastifiziermittelgemisches in der Kunststoffbahn (Oberfolie und/oder Unterfolie) beträgt 5 - 30 Gew.-%` vorzugsweise 7 - 23 Gew.-%, (bezogen auf die Kunstharzmischung der Kunststoffbahn bzw. -folie - gerechnet ohne Verarbeitungshilfsmittel, Zusatzstoffe, Füllmittel und dgl.).

Nach einer zweckmäßigen Ausführungsform besteht das Plastifiziermittel aus einem Ethylen-Vinylacetat-Copolymerisat (EVA) mit polaren Gruppen und einem Vinylacetatgehalt von 60 - 80 Gew.-%, vorzugsweise 65 - 70 Gew.-%.

Nach einer anderen bevorzugten Ausführungsform besteht das Plastifiziermittel aus einem olefinischen Terpolymerisat mit statistisch verteilten Acetat- und Kohlenmonoxidgruppen. Es weist ein Molekulargewicht größer als 200.000 und eine Zusammensetzung von 50 - 79 Gew.-%, vorzugsweise 57 - 72 Gew.-% Ethylen, 35 - 15 Gew.-%, vorzugsweise 29 - 19 Gew.-% Vinylacetat und 15 - 6 Gew.-%, vorzugsweise 14 - 9 Gew.-% Kohlenmonoxid auf.

Nach einer anderen zweckmäßigen Ausführungsform wird als Plastifiziermittel ein Polycaprolacton (PCL) mit polaren Gruppen verwendet.

Weiterhin werden bevorzugt in der Kunststoffmischung aliphatische und/oder aromatische Polycarbonsäuren eingesetzt.

Die Kunststoffbahnen (Ober- und/oder Unterfolie enthalten cadmiumfreie Zinnstabilisatoren. Die Mischungen werden vorzugsweise unter Zusatz von Stabilisatoren, Antioxidation, Verarbeitungshilfsmitteln usw. hergestellt.

Die Kunststoffbahn oder die aus Unterfolie und Oberfolie bestehende Kunststoffolie ist nach einer Ausführungsform mit einer Lackschicht oder Kunststoffbeschichtung, vorzugsweise auf der Basis von Acrylatharzen, Polyvinylchlorid-Acrylatharzen, Polyurethanharzen und/oder Epoxidharzen, überzogen.

Nach dem erfindungsgemäßen Verfahren und der erfindungsgemäßen Vorrichtung werden bevorzugt Formkörper oder Formkörperteile für Kraftfahrzeuginnenräume, Armaturenbretter von Kraftfahrzeugen sowie Sicherheitsabdeckungen, Seitenwände, Vorder- und Rückwandteile, Schalttafeln sowie Seitenpfosten und deren Sicherheitsabdeckungen für Kraftfahrzeuge und Flugzeuge hergestellt.

Zum Ausschäumen werden die an sich bekannten schäumbaren Kunststoffe, z.B. Polyurethanschaum, Polyolefinschaum und dgl. verwendet, denen je nach Art und Zusammensetzung der Kunststoffe bei der Herstellung Treibmittel, Mittel zum Schwerentflammbarmachen, Hilfs- und Zusatzstoffe vor dem Verschäumen zugesetzt werden.

Die Dicke des Schaumes richtet sich nach dem vorgesehenen Einsatzzweck und der äußeren Form des Formteiles.

Die vorliegende Erfindung betrifft weiterhin eine aus mindestens zwei Schichten bestehende Folienbahn, vorzugsweise Folienbahn für Kraftfahrzeuge, zusammengesetzt aus mindestens einer ein- oder mehrschichtigen Kunststoffolienbahn mit einer Gesamtdicke von 300 - 2500 µm, vorzugsweise 600 - 1500 µm, sowie einer unmittelbar darauf oder über eine darauf befestigte Kunststoffzwischenschicht, Druckschicht und/oder Haftschicht und/oder Oberschicht angeordnete Oberflächenschicht, wobei die Oberflächenschicht aus einer 10 - 200 µm dicken, vorzugsweise 30 - 120 µm dicken, Lackschicht besteht.

Diese Lackschicht besteht bevorzugt aus einem Polyurethanharzlack, vorzugsweise einem zwei- oder mehrkomponenten Polyurethanharzlack oder enthält diesen.

Die Lackschicht weist vorzugsweise eine Shore-A-Härte von 20 - 100, vorzugsweise 40 - 70, auf.

Die Lackzusammensetzung besteht bevorzugt aus:
- Komponente 1:: Prepolymer mit mindestens einer bifunktionalen Fettsäure und bifunktionalem Alkohol (wie z.B. Adipinsäure, 1,6 Hexandiol und/oder Neopentyglykol) sowie mit Di-isocyanatderivaten auf aliphatischer und/oder aromatischer Basis; Lösemittel: z.B. in Methylethylketon gelöst und
- Komponente 2:: Prepolymer aus Di-isocyanatderivaten sowie Füllstoffen, Pigmenten und Lackhilfsmitteln gelöst in Lösemittel oder -gemisch gelöst.
- Lackauftrag:: Mit Hilfe einer 2-Komponenten-Spritzanlage.

### Beispiel 1 (Unterfolie):

| | |
|---|---|
| Suspensionspolyvinylchlorid KW 70 | 28,6 Gew.-% |
| Acrylnitril-Butadien-Styrol-Copolymerisat (ABS) | 28,6 Gew.-% |
| Styrol-Acrylnitril-Copolymerisat (SAN) | 14,3 Gew.-% |
| Nitrilbutadien-Kautschuk (NBR) | 7,1 Gew.-% |
| Ethylen-Vinylacetat-Kohlenmonoxid-Terpolymerisat | 21,4 Gew.-% |
| | 1̅0̅0̅,̅0̅ G̅e̅w̅.̅-̅%̅ |

| | |
|---|---|
| Dioctylzinnmekaptid | 2,5 Gew.-Teile |
| Mischung von Magnesiumoxid, Magnesiumstearat, Magnesiumhydroxid, Magnesiumoxid und Magnesium-Aluminium-Hydroxi-Carbonat | 3,0 Gew.-Teile |
| Trimelithsäureester | 10,0 Gew.-Teile |
| epoxidiertes Sojabohnenöl | 5,0 Gew.-Teile |
| Verarbeitungshilfsmittel | 1,5 Gew.-Teile |
| Gleitmittel | 0,5 Gew.-Teile |
| Antioxidantien | 0,5 Gew.-Teile |

### Zeichnungsbeschreibung:

Die beigefügten Figuren 1 - 2 zeigen schematisch die erfindungsgemäßen Folien.

In Fig. 1 ist die Unterfolie (10) mit der Oberfolie (12) zu sehen, auf deren Sichtseite eine Lackschicht (11) angebracht ist.

In Fig. 2 ist eine Mehrschichtfolie schematisch dargestellt. Die Unterfolien (10) und (13) können aus dem gleichen oder unterschiedlichen Material bestehen. Die Oberfolie (12) ist mit einem Lack versehen.

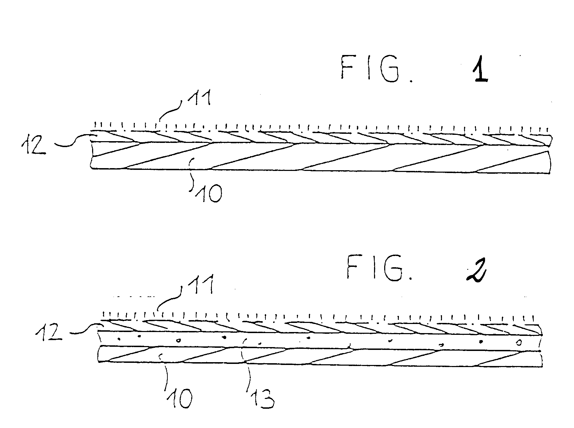

## Patentansprüche

1. Aus mehreren Schichten bestehende flexible, tiefziehfähige Kunststoffolie für Kraftfahrzeuge bestehend aus
1. 90 bis 25 Gew.-%, vorzugsweise 85 bis 28 Gew.-%, eines Vinylchloridhomopolymerisates
2. 10 bis 75 Gew.-%, vorzugsweise 15 bis 72 Gew.-%, eines Modifizierungsmittelgemisches bestehend aus Styrol-Acrylnitril-Copolymerisat (SAN) oder Kombination von Styrol-Acrylnitril-Copolymerisat (SAN) mit mindestens einem weiteren Modifizierungsmittel mit einer Glasumwandlungstemperatur von größer als 70 °C, vorzugsweise größer als 80 °C, und mindestens eines Modifizierungsmittels mit einer Glasumwandlungstemperatur von kleiner als 60 °C, vorzugsweise kleiner als 50 °C, wobei die Summe 1. und 2. 100 % ergibt, sowie zusätzlich
3. mindestens einem Stabilisierungsmittel oder Stabilisierungsmittelgemisch, wobei das Stabilisierungsmittel bezogen auf 100 Gew.-Teile der Kunststoffmischung (aus 1 und 2) aus
3.1 1 bis 10 Gew.-Teilen, vorzugsweise 2 bis 8 Gew.-Teilen, mindestens eines Stabilisators oder Stabilisatorgemisches auf der Basis einer Schwefel enthaltenden Organoz innverbindung, und
3.2 0,1 bis 10 Gew.-Teilen, vorzugsweise 1 bis 9 Gew.-Teilen, eines Costabilisierungsmittels oder Costabilisierungsmittelgemisches auf der Basis von Magnesium-Aluminium-Hydroxy-Carbonat und/oder Carbonsäuregruppen enthaltende Magnesiumverbindungen allein oder in Kombination mit Magnesiumoxid und/oder Magnesiumhydroxid, besteht,
4. je 100 Gew.-Teilen der Kunststoffmischung (1 und 2), 0,1 bis 50 Gew.-Teilen, vorzugsweise 5 bis 30 Gew.-Teilen, eines äußeren Weichmachers oder Weichmachergemisches, vorzugsweise auf der Basis eines aliphatischen und/oder aromatischen Polycarbonsäureesters, polymeren Carbonsäureester und/oder epoxidierten natürlichen Öles, sowie
5. gegebenenfalls Füllstoffen, Antioxidantien, Gleitmitteln, Verarbeitungshilfsmitteln, Farbstoffen oder Farbpigmenten, Flammschutzmitteln oder anderen Zusatzmitteln oder Gemischen von einem oder mehreren dieser Stoffe,
wobei die Kunststoffolie eine Gesamtdicke von 300 bis 2.500 µm aufweist, aus mindestens einer Unterschicht oder Unterfolie und mindestens einer 40 bis 500 µm dicken Oberschicht oder Oberfolie besteht und unmittelbar auf der Oberschicht oder Oberfolie oder über eine darauf befestigte Kunststoffschicht, Druckschicht und/oder Haftschicht eine Lackschicht mit einer Dicke von 10-200 µm angeordnet ist.

2. Kunststoffolie nach Anspruch 1, dadurch gekennzeichnet, daß das Gewichtsverhältnis des Modifizierungsmittels oder Modifizierungsmittelgemisches mit einer Glasumwandlungstemperatur von größer als 70 °C, vorzugsweise größer als 80 °C, zu dem weiteren Modifizierungsmittel oder Modifizierungsmittelgemisch mit einer Glasumwandlungstemperatur von kleiner als 60 °C, vorzugsweise kleiner als 50 °C, 4 : 1 bis 1 : 4, vorzugsweise 3 : 1 bis 1 : 3, beträgt.

3. Kunststoffolie nach Ansprüchen 1 und 2, dadurch gekennzeichnet, daß das weitere Modifizierungsmittel das eine Glasumwandlungstemperatur von größer als 70 °C besitzt, aus einem Methylstyrol-Acrylnitril-Copolymerisat, einem Styrol-Maleinsäureanhydrid-Copolymerisat, einem Polymethylmethacrylat (PMMA) und/oder einem Copolymerisat aus einem oder mehreren Acrylestern mit Acrylnitril oder einer Mischung von zwei oder mehreren dieser Copolymerisate und das andere Modifizierungsmittel mit einer Glasumwandlungstemperatur von kleiner als 60°C aus mindestens einem Olefin-Copolymerisat oder -Terpolymerisat mit polaren Gruppen, vorzugsweise einem Ethylen-Copolymerisat oder -Terpolymerisat mit polaren Gruppen besteht.

4. Kunststoffolie nach einem oder mehreren der Ansprüche 1 bis 3, dadurch gekennzeichnet, daß die mehrschichtige Folie eine Gesamtdicke von
600 bis 1.500 µm,
und die Oberschicht oder Oberfolie eine Dicke von
80 bis 400 µm,
aufweist, wobei vorzugsweise die Zusammensetzung und/oder der Gewichtsanteile der einzelnen Bestandteile zwischen Unterschicht oder Unterfolie und Oberschicht oder Oberfolie voneinander abweichen.

5. Kunststoffolie nach Anspruch 4, dadurch gekennzeichnet, daß unter der Unterfolie eine Sperr- und/oder Haftschicht mit einer Dicke von
3 bis 200 µm, vorzugsweise
10 bis 150 µm,
angeordnet ist.

6. Kunststoffolie nach einem oder mehreren der Ansprüche 1 bis 5, dadurch gekennzeichnet, daß das Modifizierungsmittel mit einer Glastemperatur unter 60 °C bis zu 60 Gew.-% (bezogen auf 100 Gewichtsteile des Modifizierungsmittels mit einer Glastemperatur unter 60 °C), vorzugsweise bis zu 45 Gew.-%, durch Nitrilbutadien-Kautschuk , Ethylen-Propylen-Copolymerisat und/oder Ethylen-Propylen-Dien-Polymerisat (EPDM) ersetzt ist.

7. Kunststoffolie nach Anspruch 1, dadurch gekennzeichnet, daß die Lackschicht aus einem Polyurethanharzlack, vorzugsweise einem zwei- oder mehrkomponenten Polyurethanharzlack besteht oder diesen enthält, und eine Shore-A-Härte von
40 bis 70,
aufweist.

8. Verwendung der Kunststoffolie nach einem oder mehreren der Ansprüche 1 bis 7 zur Herstellung von Formkörpern oder Formkörperteilen für Kraftfahrzeuginnenräume, Armaturenbrettern von Kraftfahrzeugen sowie Sicherheitsabdeckungen, Seitenwänden, Vorder- und Rückwandteilen, Schalttafeln sowie Seitenpfosten und deren Sicherheitsabdeckungen für Kraftfahrzeuge.

## Claims

1. A flexible, deep-drawable plastics film consisting of a plurality of layers, for motor vehicles, consisting of
1. 90 to 25% by weight, preferably 85 to 28% by weight, of a vinyl chloride homopolymer,
2. 10 to 75% by weight, preferably 15 to 72% by weight, of a modifying agent mixture consisting of styrene-acrylonitrile copolymer (SAN) or a combination of styrene-acrylonitrile copolymer (SAN) with at least one other modifying agent having a glass transition temperature of more than 70°C, preferably more than 80°C, and of at least one modifying agent having a glass transition temperature of less than 60°C, preferably less than 50°C, the total of 1. and 2. being 100%, and also additionally
3. at least one stabiliser or stabiliser mixture, the stabiliser consisting of
3.1 1 to 10 parts by weight, preferably 2 to 8 parts by weight, of at least one stabiliser or stabiliser mixture on the basis of a sulphur-containing organo-tin compound, and
3.2 0.1 to 10 parts by weight, preferably 1 to 9 parts by weight, of a co-stabilisation agent or co-stabilisation agent mixture on the basis of magnesium-aluminium-hydroxy carbonate and/or magnesium compounds containing carboxylic acid groups, alone or in combination with magnesium oxide and/or magnesium hydroxide,
relative to 100 parts by weight of the plastics mixture (of 1 and 2),
4. 0.1 to 50 parts by weight, preferably 5 to 30 parts by weight, of an external plasticiser or plasticiser mixture, preferably on the basis of an aliphatic and/or aromatic polycarboxylic acid ester, polymeric carboxylic acid ester and/or epoxidised natural oil, per 100 parts by weight of the plastics mixture (1 and 2),
5. optionally fillers, antioxidants, mould-release agents, processing aids, dyes or colour pigments, flameproofing agents or other additives or mixtures of one or more of these materials,
the plastics film having a total thickness of 300 to 2,500 µm, consisting of at least one lower layer or lower film and at least one upper layer or upper film 40 to 500 µm thick, and a paint layer having a thickness of 10 - 200 µm being located directly on the upper layer or upper film or over a plastics layer, print layer and/or adhesive layer attached thereto.

2. A plastics film according to Claim 1, characterised in that the weight ratio of the modifying agent or modifying agent mixture having a glass transition temperature of more than 70°C, preferably more than 80°C, to the additional modifying agent or modifying agent mixture having a glass transition temperature of less than 60°C, preferably less than 50°C, is 4 : 1 to 1 : 4, preferably 3 : 1 to 1 : 3.

3. A plastics film according to Claims 1 and 2, characterised in that the additional modifying agent which has a glass transition temperature of more than 70°C consists of a methylstyrene-acrylonitrile copolymer, a styrene-maleic anhydride copolymer, a polymethyl methacrylate (PMMA) and/or a copolymer of one or more acrylic esters with acrylonitrile or a mixture of two or more of these copolymers and the other modifying agent having a glass transition temperature of less than 60°C consists of at least one olefin copolymer or terpolymer having polar groups, preferably an ethylene copolymer or terpolymer having polar groups.

4. A plastics film according to one or more of Claims 1 to 3, characterised in that the multi-layered film has a total thickness of
600 to 1,500 µm,
and the upper layer or upper film has a thickness of
80 to 400 µm,
with the composition and/or the proportions by weight of the individual constituents preferably differing from one another between the lower layer or lower film and the upper layer or upper film.

5. A plastics film according to Claim 4, characterised in that a barrier layer and/or adhesive layer having a thickness of
3 to 200 µm, preferably
10 to 150 µm,
is located beneath the lower film.

6. A plastics film according to one or more of Claims 1 to 5, characterised in that up to 60% by weight (relative to 100 parts by weight of the modifying agent having a glass transition temperature of below 60°C), preferably up to 45% by weight, of the modifying agent having a glass transition temperature of below 60°C is replaced by nitrile-butadiene rubber, ethylenepropylene copolymer and/or ethylene-propylene-diene polymer (EPDM).

7. A plastics film according to Claim 1, characterised in that the paint layer consists of or contains a polyurethane resin paint, preferably a two-component or multi-component polyurethane resin paint, and has a Shore-A hardness of
40 to 70.

8. The use of the plastics film according to one or more of Claims 1 to 7 for the production of moulded bodies or moulded body parts for the interiors of motor vehicles, dashboards for motor vehicles and also safety covers, side walls, front and rear wall parts, control panels and side struts and their safety coverings for motor vehicles.

## Revendications

1. Feuille de matière plastique flexible emboutissable constituée de plusieurs couches et susceptible d'être utilisée pour des véhicules automobiles, comprenant :
1. 90 à 25 % en poids, de préférence 85 à 28 % en poids, d'un homopolymère de chlorure de vinyle,
2. 10 à 75 % en poids, de préférence 15 à 72 % en poids, d'un mélange d'agents modificateurs constitué d'un copolymère de styrène-acrylonitrile (SAN) ou d'une combinaison de copolymère de styrène-acrylonitrile (SAN) avec au moins un autre agent modificateur ayant une température de transition vitreuse supérieure à 70°C, de préférence supérieure à 80°C, et au moins un agent modificateur ayant une température de transition vitreuse inférieure à 60°C, de préférence inférieure à 50°C, la somme des matières 1 et 2 faisant 100 %_{,} ainsi que, également :
3. au moins un agent stabilisant ou un mélange d'agents stabilisants, l'agent stabilisant étant constitué, par rapport à 100 parties en poids du mélange plastique de 1 et 2 de
3.1. 1 à 10 parties en poids, de préférence 2 à 8 parties en poids, d'au moins un stabilisant ou d'un mélange de stabilisants à base d'un composé d'organoétain contenant du soufre et de
3.2. 0,1 à 10 parties en poids, de préférence 1 à 9 parties en poids, d'un agent de costabilisation ou d'un mélange d'agents de costabilisation à base d'hydroxycarbonate de magnésium et d'aluminium et/ou de composés de magnésium contenant des groupes acide carboxylique seuls ou en combinaison avec de l'oxyde de magnésium et/ou de l'hydroxyde de magnésium,
4. respectivement par 100 parties en poids du mélange plastique (1 et 2), de 0,1 à 50 parties en poids, de préférence 5 à 30 parties en poids, d'un plastifiant ou d'un mélange de plastifiants externe, de préférence à base d'un ester d'acide polycarboxylique aliphatique et/ou aromatique, d'un ester d'acide carboxylique polymère et/ou d'une huile naturelle époxydée, ainsi que
5. éventuellement des charges, des anti-oxydants, des lubrifiants, des agents auxiliaires de traitement, des colorants ou des pigments colorés, des agents ignifugeants ou d'autres additifs ou des mélanges d'une ou plusieurs de ces matières,
la feuille de matière plastique présentant une épaisseur totale de 300 à 2.500 micromètres, étant constituée d'au moins une couche inférieure ou une feuille inférieure et d'au moins une couche supérieure ou une feuille supérieure de 40 à 500 micromètres et une couche de vernis d'une épaisseur de 10 à 200 micromètres étant agencée directement sur la couche ou sur la feuille supérieure ou sur une couche de matière plastique, une couche appliquée sous pression et/ou une couche autocollante fixée sur la couche ou la feuille supérieure.

2. Feuille de matière plastique selon la revendication 1, caractérisée en ce que le rapport pondéral de l'agent de modification ou du mélange d'agents de modification ayant une température de transition vitreuse supérieure à 70°C, de préférence supérieure à 80°C, à l'autre agent de modification ou mélange d'agents de modification ayant une température de transition vitreuse inférieure à 60°C, de préférence inférieure à 50°C, est de 4:1 à 1:4, de préférence de 3:1 à 1:3.

3. Feuille de matière plastique selon les revendications 1 et 2, caractérisée en ce que le premier agent de modification, qui possède une température de transition vitreuse supérieure à 70°C, est constitué d'un copolymère de méthylstyrène et d'acrylonitrile, d'un copolymère de styrène et d'anhydride d'acide maléique, d'un polyméthacrylate de méthyle (PMMA) et/ou d'un copolymère d'un ou plusieurs esters acryliques avec de l'acrylonitrile ou un mélange de deux ou plusieurs de ces copolymères et l'autre agent de modification ayant un point de transition vitreuse inférieur à 60°C est constitué d'au moins un copolymère ou un terpolymère d'oléfines avec des groupes polaires, de préférence un copolymère ou un terpolymère d'éthylène avec des groupes polaires.

4. Feuille de matière plastique selon une ou plusieurs des revendications 1 à 3, caractérisée en ce que la feuille composite a une épaisseur totale de :
600 à 1.500 micromètres,
et la couche ou la feuille supérieure présente une épaisseur de :
80 à 400 micromètres,
la composition et/ou les fractions pondérales des composants individuels s'écartant de préférence l'une de l'autre entre la couche ou la feuille inférieure et la couche ou la feuille supérieure.

5. Feuille de matière plastique selon la revendication 4, caractérisée en ce qu'une couche barrage et/ou une couche de colle d'une épaisseur de
3 à 200 micromètres, de préférence
10 à 150 micromètres,
sont agencées en dessous de la feuille inférieure.

6. Feuille de matière selon une ou plusieurs des revendications 1 à 5, caractérisée en ce que l'agent de modification ayant une température de transition vitreuse inférieure à 60°C est remplacé jusqu'à 60 % en poids (par rapport à 100 parties en poids de l'agent de modification ayant une température de transition vitreuse inférieure à 60°C), de préférence jusqu'à 45 % en poids par un caoutchouc de nitrilebutadiène, un copolymère d'éthylène et de propylène et/ou un polymère d'éthylène, de propylène et de diène (EPDM).

7. Feuille de matière plastique selon la revendication 1, caractérisée en ce que la couche de vernis est constituée d'un vernis de résine polyuréthane, de préférence, d'un vernis de résine polyuréthane à deux ou plusieurs composants ou contient ces ingrédients, et présente une dureté Shore-A de 40 à 70.

8. Emploi de la feuille de matière plastique selon une ou plusieurs des revendications 1 à 7 pour la fabrication de corps moulés ou de parties de corps moulés pour espace intérieur de véhicules automobiles, tableaux de bord de véhicules automobiles, revêtements de sécurité, parois latérales, parties de parois avant et arrière, tableaux de commande ainsi que montants latéraux et leurs recouvrements de sécurité pour véhicules automobiles.
